(19) Europäisches Patentamt
European Patent Office
Office européen des brevets

(11) Numéro de publication: **0 074 900**
**B1**

(12) **FASCICULE DE BREVET EUROPEEN**

(45) Date de publication du fascicule du brevet: **20.11.86**

(51) Int. Cl.$^4$: **C 01 B 33/28**

(21) Numéro de dépôt: **82401650.5**

(22) Date de dépôt: **10.09.82**

(54) **Procédé de préparation de zéolites synthétiques et zéolites obtenues par ce procédé.**

(30) Priorité: **14.09.81 FR 8117343**

(43) Date de publication de la demande:
**23.03.83 Bulletin 83/12**

(45) Mention de la délivrance du brevet:
**20.11.86 Bulletin 86/47**

(84) Etats contractants désignés:
**BE DE FR GB IT NL**

(56) Documents cités:
**FR-A-2 027 390**
**FR-A-2 325 603**
**GB-A- 574 911**
**US-A-3 733 390**

(73) Titulaire: **COMPAGNIE FRANCAISE DE RAFFINAGE Société anonyme dite:**
**5, rue Michel-Ange**
**F-75781 Paris Cedex 16 (FR)**

(72) Inventeur: **Bourgogne, Michel**
**19, Résidence Albert Schweitzer**
**F-68400 Riedisheim (FR)**
Inventeur: **Guth, Jean-Louis**
**59, rue Bellevue**
**F-68200 Brunstatt (FR)**
Inventeur: **Wey, Raymond**
**29, rue George Sand**
**F-68200 Mulhouse (FR)**

(74) Mandataire: **Jolly, Jean-Pierre et al**
**Cabinet BROT et JOLLY 83, rue d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 074 900 B1**

Courier Press, Leamington Spa, England.

**Description**

La présente invention concerne un procédé de préparation de zéolites synthétiques. L'invention concerne également les zéolites obtenues par ledit procédé.

Les zéolites constituent une famille d'aluminosilicates alcalins ou alcalino-terreux, comprenant plusieurs dizaines de composés, dont certains existent à l'état naturel.

La structure des zéolites peut être définie comme un réseau tridimensionnel de tétraèdres de formule Si $O_4$ et Al $O_4$ reliés par des ponts oxygène. Ce réseau, dont le géométrice varie d'une zéolite à une autre, définit un ensemble de cavités reliées par des canaux ou pores, de dimensions variables d'une zéolite à une autre, mais uniformes pour une zéolite donnée. Ces cavités sont occupées par des ions ou des molécules d'eau ayant une grande liberté de mouvement.

Les zéolites peuvent être différenciées les unes des autres par leur composition chimique et, plus spécialement et de façon précise, par leur spectre de diffraction des rayons X.

Leur spectre de diffraction des rayons X permet de calculer les espacements *d* entre les plans réticulaires des cristaux exprimés en Angströms (Å) et les intensités relatives par rapport à la raie la plus forte des raies du diagramme de diffraction.

Des modifications mineures, quant aux espacements réticulaires et aux intensités observables sur certains diagrammes, sont dues au remplacement de certains cations par d'autres ou à des variations du rapport $SiO_2/Al_2O_3$, mais elles ne traduisent nullement une variation structurale de la zéolite.

La dimension déterminée des pores permet, pour une zéolite donnée, d'absorber ou de rejeter des molécules détermines, selon la polarisabilité de celles-ci.

Ces zéolites ont donc été utilisées pour la séparation de différents composés, par exemple pour le séchage ou la purification de gaz. Elle sont également utilisées comme catalyseurs ou supports de catalyseurs de conversion de composés, par exemple dans des réactions de craquage, d'alkylation ou d'isomérisation d'hydrocarbures.

Les propriétés intéressantes de ces zéolites ont conduit à la recherche de procédés de fabrication de zéolites synthétiques. Il en existe de nombreux, qui font l'objet de multiples brevets ou de publications.

Ces zéolites synthétiques sont communément désignées par un sigle, comme les zéolites A, X, Y, W, ZSM 5, ZSM 11, ZSM 12, etc.

Parmi les brevets concernant la préparation de zéolites synthétiques, on peut citer:

—le brevet français n° 1 117 776, pour la zéolite A,
—le brevet français n° 1 117 756, pour la zéolite X,
—le brevet français n° 1 231 239, pour la zéolite Y,
—le brevet britannique n° 574 911, pour la chabazite,
—le brevet US n° 3 012 853, pour la zéolite W,
—le brevet français n° 1 212 146, pour la zéolite F,
—le brevet US n° 3 709 979, pour la zéolite ZSM 11,
—le brevet US n° 3 702 886, pour la zéolite ZSM 5.

Les six premières zéolites citées correspondant à des zéolites naturelles, les zéolites X et Y étant par exemple des faujasites, la zéolite W une merlinoite, la zéolite F une édingtonite. Les deux dernières, les zéolites ZSM 11 et ZSM 5, ne sont pas connues dans la nature.

D'autres zéolites naturelles ont été également synthétisées.

La synthèse de la mordénite est décrite dans un article de R. M. Barrer, The Journal of Chemical Society, page 2158 (1948).

La synthèse de la ferriérite est décrite dans un article de J. P. Giannetti et A. J. Perrotta "Selective Hydrocracking with Ferrierite-based catalysts" paru dans Industrial Engineering Chemistry, Process Design and Development, volume 14, n° 1, 1975.

La synthèse de la clinoptilolite est décrite dans une article de D. B. Hawkins, Clays and Clay Minerals, volume 29, pages 331 à 340 (1981).

D'une façon générale, on prépare les zéolites en faisant réagir, par exemple, un silicate de sodium et/ou de la silice avec un aluminate de sodium, quand il s'agit d'une zéolite de sodium, dans des conditions opératoires bien définies et avec des rapports bien précis entre les précurseurs des zéolites.

FR—A—2 027 390 décrit un procédé de préparation d'une zéolite ZSM 4 selon lequel on introduit dans un environnement cristallin un alumino-silicate cristallin et l'on ajuste la composition du mélange constituant l'ambiance de cristallisation de manière que le métal alcalin, l'alumine, la silice, l'oxyde de tétraméthylammonium et l'eau constitutifs du mélange soient dans des rapports déterminés.

La présente invention vise à proposer un moyen simple de préparation d'autre zéolites synthétiques, à partir de zéolites différentes (synthétiques ou naturelles), et en particulier à partir de zéolite déjà conditionnées.

L'invention a par conséquent pour objet un procédé de préparation de la chabazite, caractérisé en ce que l'on applique à une zéolite de départ Y un traitement par au moins une base minérale choisie dans le groupe consitué par la lithine et la potasse.

Un autre objet de l'invention est constitué par un procédé de préparation de l'édingtonite, caractérisé en ce que l'on applique à une zéolite de départ Y un traitement par au moins de la lithine.

L'invention concerne également un procédé de préparation de la ZSM 5, caractérisé en ce que l'on

applique à une zéolite de départ choisie dans le groupe constitué par les zéolites X ou Y, la mordénite, la ferrierite et la clinopyilolite un traitement par une base constituée par de l'hydroxyde de tétrapropylammonium, éventuellement en mélange avec de la soude.

Enfin, l'invention a aussi pour objet un procédé préparation de la ZSM 11, caractérisé en ce que l'on applique à une zéolite de départ choisie dans le groupe constitué par les zéolites X ou Y, la mordénite, la ferriérite et la clinoptilolite un traitement par une base constitués par de l'hydroxyde de tétrabutylammonium, éventuellement en mélange avec de la soude.

Selon l'invention, on utilise donc au départ une faujasite X ou Y, une ferriérite, une clinoptilolite ou une mordénite.

Dans le cas de la faujasite de sodium, sa formule générale est la suivante:

$$1\pm0,2\ Na_2O/Al_2O_3/2 \text{ à } 6\ SiO_2/z\ H_2O \text{ avec } 0\leqslant z\leqslant9.$$

Pour la faujasite X, le rapport

$$\frac{SiO_2}{Al_2O_3}$$

est compris entre 2 et 3.

Pour la faujasite Y, le rapport

$$\frac{SiO_2}{Al_2O_3}$$

est plus élevé et est compris entre 3 et 6.

Les spectres de diffraction aux rayons X des zéolites X et Y sont respectivement donnés dans les brevets français n° 1 117 756 et 1 231 239, auxquels on pourra se reporter.

Dans le cas de la mordénite, sa formule générale est le suivante:

$$M_{2/n}O/Al_2O_3/8 \text{ à } 10\ SiO_2/0 \text{ à } 6H_2O, \text{ où } M$$

désigne les cations généralement présente dans les zéolites naturelles ou synthétiques, comme les cations alcalins ou alcalino-terreux par exemple,

*n* étant la valence du cation.

Le spectre de diffraction aux rayons X de la mordénite est donné dans l'article de R. M. Barrer, paru dans le The Journal of Chemical Society, page 2 158 (1948).

Dans le cas de la clinoptilolite, sa formule générale est la suivante:

$$M_{2/n}O/Al_2O_3/8 \text{ à } 11\ SiO_2/0 \text{ à } 7\ H_2O, \text{ où } M$$

désigne les cations généralement présente dans les zéolites naturelles ou synthétiques, comme les cations alcalins ou alcalino-terreux par exemple, *n* étant la valence du cation.

Le spectre de diffraction aux rayons X de la clinoptilolite est donné dans un article de L. L. Ames Jr, L. B. Sand, S. S. Godich, paru dans Economic Geology, V. 53, pages 22—37 (1958).

Dans le cas de la ferriérite, sa formule générale est la suivante:

$$M_{2/n}O/Al_2O_3/10\ SiO_2/0 \text{ à } 7\ H_2O,$$

où M désigne les cations généralement présents dans les zéolites naturelles ou synthétiques, comme les cations alcalins ou alcalino-terreux par exemple, *n* étant la valence du cation.

Le spectre de diffraction aux rayons X de la ferriérite est donné dans un article de R. M. Barrer, D. J. Marshall, paru dans American Mineralogist, V, 50, pages 484 à 489 (1965).

Les zéolites X et Y, la mordénite, la ferriérite et la clinoptilolite peuvent, préalablement à leur traitement par une base, subir un traitement pour échanger le (ou les) cation (s) qu'elles contiennent.

On peut, par exemple, échanger les ions sodium d'une faujasite au sodium par des ions potassium, lithium ou hydrogène.

Ce traitement peut être effectué par traitement de la faujasite par un sel, de potassium par exemple, ou par un traitement par un acide tel que l'acide chlorhydrique, lorsque l'on veut remplacer les ions sodium par des ions hydrogène.

Les ions hydrogène peuvent être également introduits en remplaçant d'abord les ions sodium par des ions ammonium, puis en calcinant la zéolite.

Préalablement au traitement basique, on peut également ajouter à la zéolite de la silice pour augmenter le rapport

$$\frac{SiO_2}{Al_2O_3}.$$

Le traitement par une base peut être effectué par une base minérale et/ou organique.

Par exemple, pour obtenir la chabazite, la merlinoite ou l'édingtonite, on peut utiliser une base minérale comme la lithine ou la potasse, selon la zéolite que l'on désire préparer.

Pour obtenir la ZSM 5 et la ZSM 11, on peut utiliser conjointement la soude et une base organique, l'hydroxyde de tétrapropylammonium (pour la ZSM 5) ou l'hydroxyde de tétrabutylammonium (pour la ZSM 11).

L'utilisation de la soude en même temps que la base organique n'est pas toujours nécessaire.

En utilisant le procédé selon l'invention, la Demanderesse a réussi à préparer plusieurs zéolites à partir de faujasite X ou Y au sodium, de mordénite, de ferriérite et de clinoptilolite.

Les conditions opératoires pour la préparation par le procédé selon l'invention, de la chabazite, de la merlinoite et de l'édingtonite sont données dans le tableau I ci-après:

TABLEAU I

| Zéolite de départ | Zéolite à préparer | Parametres | | | | | | | |
|---|---|---|---|---|---|---|---|---|---|
| | | A | | B | | C | | D | |
| | | Domaine | | Domaine | | Domaine | | Domaine | |
| | | large | préféré | large | préféré | large | préféré | large | préféré |
| Na-Y | Chabazite | 0,1 à 6 | 0,5 à 3,5 | 3,5 à 10 | 3,8 à 8 | >70% | >80% | 2 à 20 | 3 à 12 |
| Na-Y ou Na-X | Merlinoite | 0,1 à 10 | 0,5 à 6 | 2 à 10 | 2 à 8 | >70% | >80% | 2 à 20 | 8 à 12 |
| Na-X | Edingtonite | 0,1 à 10 | 0,5 à 6 | 1,8 à 2,4 | 1,9 à 2,2 | >70% | >80% | 2 à 20 | 3 à 8 |

A= Taille des cristaux en microns, immédiatement avant le traitement par une base, c'est-à-dire après les traitements éventuels tels l'echange de cations.

B= Rapport $SiO_2/Al_2O_3$ de la zéolite de départ.

C= Taux d'échange $\frac{M}{M+Na}$ + $M=Li^+$, $NH4^+$, $K^+$, $H^+$.

D= Rapport $\frac{\text{liquide}}{\text{solide}}$ en poids lors du traitement par une base liquide.

TABLEAU I (Suite)

| Zéolite de départ | Zéolite à préparer | Parametres | | | | | | | |
|---|---|---|---|---|---|---|---|---|---|
| | | E | | F | | G | | H | |
| | | Domaine | | Domaine | | Domaine | | Domaine | |
| | | large | préféré | large | préféré | large | préféré | large | préféré |
| Na-Y | Chabazite | $\frac{M}{1000}$ à 4M | $\frac{M}{100}$ à 0,8M | 1 à 0 | 0,8 à 0 | 80 à 250 | 90 à 150 | 4 à 360 | 6 à 100 |
| Na-Y ou Na-X | Merlinoite | $\frac{M}{100}$ à 4M | $\frac{M}{20}$ à 2M | 0,9 à 0 | 0,8 à 0 | 80 à 300 | 90 à 260 | 4 à 360 | 6 à 100 |
| Na-X | Edingtonite | $\frac{M}{100}$ à 2M | $\frac{M}{10}$ à M | 0,8 à 0 | 0,5 à 0 | 80 à 250 | 90 à 150 | 4 à 360 | 6 à 120 |

E= Concentration molaire de la base

F= Rapport $\frac{Li^+}{Li^+ + K^+}$ ($Li^+$=ions $Li^+$ de la lithine quand on attaque une zéolite contenant des ions potassium $K^+$ par de la lithine).

G= Température, en °C
H= Durée de traitement par la base, en heures.

La formule générale d'une chabazite préparée par le procédé selon l'invention est:

$$1 \pm 0{,}2\ M_2O/Al_2O_3/3{,}7\ \text{à}\ 6\ SiO_2/4\ \text{à}\ 8\ H_2O$$

où M peut être le potassium, un mélange de potassium et de lithium, un mélange de potassium et de sodium, un mélange de potassium, lithium et sodium ou un mélange de lithium et de sodium.

Son diagramme de diffraction des rayons X est donné dans le Tableau II ci-après, où *d* est l'espacement entre deux plans réticulaires exprimé en Å et $I/I_o$ le rapport entre l'intensité relative I par rapport à l'intensité la plus forte $I_o$.

TABLEAU II

| d(Å) | $I/I_o$ |
|---|---|
| 9,34 | 46 |
| 6,85 | 14 |
| 5,53 | 10 |
| 5,02 | 15 |
| 4,68 | 6 |
| 4,31 | 48 |
| 3,97 | 7 |
| 3,87 | 31 |
| 3,606 | 16 |
| 3,446 | 10 |
| 3,236 | 7 |
| 3,192 | 8 |
| 3,124 | 6 |
| 3,03 | 3 |
| 2,924 | 100 |
| 2,892 | 48 |
| 2,772 | 6 |
| 2,689 | 6 |
| 2,604 | 19 |
| 2,576 | 7 |
| 2,510 | 12 |

La chabazite peut être utilisée en catalyse pour la transformation de méthanol en oléfines et la séparation des hydrocarbures branchés d'hydrocarbures linéaires.

La formule générale d'une merlinoite préparée par le procédé selon l'invention est:

$$1 \pm 0{,}2\ M_2O/Al_2O_3/2{,}2\ \text{à}\ SiO_2/3{,}5\ \text{à}\ 4{,}5\ H_2O,\ \text{où}\ M$$

peut être un cation potassium, un mélange de cations potassium et lithium, un mélange de cations potassium et sodium, un mélange de cations potassium, lithium et sodium ou un mélange de cations lithium et sodium.

Son diagramme de diffraction de rayons X est donné dans le Tableau III ci-après:

TABLEAU III

| d(Å) | $I/I_o$ |
|---|---|
| 9,97 | 9 |
| 8,16 | 30 |
| 7,01 | 47 |
| 5,36 | 31 |
| 4,97 | 33 |
| 4,46 | 18 |
| 4,26 | 19 |
| 4,06 | 9 |
| 3,650 | 17 |
| 3,536 | 4 |
| 3,238 | 100 |
| 3,158 | 96 |
| 2,949 | 68 |
| 2,764 | 11 |
| 2,724 | 48 |
| 2,672 | 20 |
| 2,540 | 24 |
| 2,504 | 6 |
| 2,428 | 11 |

La merlinoite, apparentée à la zéolite dite W, peut être utilisée notamment pour l'élimination des ions ammonium de solutions aqueuses en contenant et donc pour traiter des eaux polluées.

La formule générale d'une édingtonite préparée par le procédé selon l'invention est:

$$1 \pm 0,2\ M_2O/Al_2O_3/1,8 \text{ à } 2,2\ SiO_2/0 \text{ à } 3,5\ H_2O, \text{ où } M$$

peut être un mélange de cations potassium et lithium, un mélange de cations potassium et sodium, un mélange de cations potassium, sodium et lithium, ou encore un mélange de cations lithium et sodium.

Son diagramme de diffraction de rayons X est donné dans le Tableau IV ci-après:

TABLEAU IV

| d(Å) | $I/I_o$ |
|---|---|
| 6,94 | 100 |
| 6,47 | 20 |
| 5,36 | 2 |
| 4,76 | 16 |
| 3,94 | 4 |
| 3,64 | 7 |
| 3,477 | 16 |
| 3,264 | 16 |
| 3,105 | 10 |
| 3,072 | 92 |
| 2,952 | 49 |
| 2,807 | 84 |
| 2,720 | 9 |

L'édingtonite, apparentée à la zéolite dite F, peut être utilisée notamment pour l'élimination des ions ammonium de solutions aqueuses en contenant, et donc pour traiter des eaux polluées.

Les conditions opératoires pour la préparation par le procédé selon l'invention des zéolites ZSM 5 et ZSM 11 à partir de faujasites X et Y, de mordénite, de clinoptilolite, de ferriérite sont données dans le Tableau V ci-après.

TABLEAU V

| Zéolite de départ | Zéolite à préparer | Parametres | | | | | |
|---|---|---|---|---|---|---|---|
| | | A | | I | | J | |
| | | Domaine | | Domaine | | Domaine | |
| | | Large | Préféré | Large | Préféré | Large | Préféré |
| Na-X ou Na-Y<br>Mordénite<br>Clinoptilolite<br>Ferriérite | ZSM 11 | 0,1 à 10 | 0,5 à 6 | 10 à 200 | 20 à 150 | 30 à 500 | 50 à 300 |
| | ZSM 5 | 0,1 à 10 | 0,5 à 6 | 10 à 200 | 20 à 150 | 10 à 500 | 30 à 300 |

A= Taille des cristaux en microns, immédiatement avant le traitement par une base, c'est-à-dire après les traitements éventuels tel l'échange des cations.

I = Rapport Si $O_2/Al_2O_3$ du mélange réactionnel avant transformation.

J = Rapport molaire $\frac{H_2O}{OH^-}$

TABLEAU V (suite)

| Zéolite de départ | Zéolite à preparer | Parametres | | | | | | | | | |
|---|---|---|---|---|---|---|---|---|---|---|---|
| | | K | | L | | M | | G | | H | |
| | | Domaine | | Domaine | | Domaine | | Domaine | | Domaine | |
| | | Large | Préféré | Large | Préfére | Large | Préféré | Large | Préféré | Large | Préféré |
| Na-X ou Na-Y mordénite | ZSM 11 | 0,05 à 0,6 | 0,1 à 0,4 | 0,01 à 0,5 | 0,05 à 0,3 | 0,9 à 0,05 | 0,7 à 0,3 | 100 à 200 | 120 à 180 | 7 à 170 | 20 à 120 |
| Clinoptilolite Ferriérite | ZSM 5 | 0,05 à 1 | 0,2 à 0,8 | 0,01 à 0,8 | 0,05 à 0,2 | 0,9 à 0,05 | 0,8 à 0,1 | 100 à 200 | 120 à 180 | 7 à 170 | 20 à 120 |

K= Rapport molaire $\frac{OH^-}{SiO_2}$

L= Rapport molaire $\frac{R_4N^+}{SiO_2}$, avec $R=C_4H_9$ pour la préparation de la ZSM 11
ou $R=C_3H_7$ pour la préparation de la ZSM 5.

M= Rapport molaire $\frac{M}{M+R_4N^+}$ ($M=Na^+$, $Li^+$, $K^+$, $H^+$).

G= Température, en °C.
H= Durée du traitement par base en heures.

La formule générale d'une ZSM 5 préparée par le procédé selon l'invention est:

$$1 \pm 0{,}2\ M_2O/Al_2O_3/10 \text{ à } 100\ SiO_2/0 \text{ à } 50\ H_2O, \text{ où } M$$

peut être le cation tétrapropylammonium, un mélange de cations sodium et tétrapropylammonium, un mélange de cations potassium et tétrapropylammonium, um mélange de cations lithium et tétrapropylammonium, un mélange de cations potassium, sodium, et tétrapropylammonium ou un mélange de cations lithium, sodium et tétrapropylammonium.

Son diagramme de diffraction de rayons X est donné dans le Tableau VI ci-après:

TABLEAU VI

| d(Å) | $I/I_o$ |
|---|---|
| 11,04 | 56 |
| 10,05 | 35 |
| 9,73 | 14 |
| 8,90 | 3 |
| 8,06 | 9 |
| 7,43 | 8 |
| 7,07 | 3 |
| 6,69 | 4 |
| 6,36 | 9 |
| 6,04 | 9 |
| 5,69 | 7 |
| 5,56 | 10 |
| 5,36 | 1 |
| 5,14 | 2 |
| 4,99 | 5 |
| 4,59 | 7 |
| 4,34 | 8 |
| 4,25 | 10 |
| 4,00 | 7 |
| 3,835 | 100 |
| 3,757 | 34 |
| 3,719 | 43 |
| 3,645 | 30 |
| 3,439 | 11 |
| 3,329 | 9 |
| 3,259 | 4 |
| 3,049 | 10 |
| 2,982 | 15 |
| 2,949 | 6 |
| 2,864 | 2 |
| 2,733 | 4 |
| 2,606 | 5 |
| 2,488 | 5 |
| 2,398 | 4 |

La formule générale d'une ZSM 11 préparée par le procédé selon l'invention est:

$$1 \pm 0{,}2\ M_2O/Al_2O_3/10 \text{ à } 100\ SiO_2/0 \text{ à } 50\ H_2O, \text{ où } M$$

peut être le cation tétrabutylammonium, un mélange de cations sodium et tétrabutylammonium, un mélange de cations potassium et tétrabutylammonium, un mélange de cations lithium et tétrabutylammonium, un mélange de cations potassium, sodium et tétrabutylammonium, ou un mélange de cations potassium, sodium et tétrabutylammonium, ou un mélange de cations lithium, sodium et tétrabutylammonium.

Son diagramme de diffraction de rayons X est donné dans le tableau VII ci-après:

TABLEAU VII

| d(Å) | $I/I_o$ |
|---|---|
| 11,10 | 52 |
| 9,99 | 41 |
| 7,45 | 5 |
| 7,08 | 2 |
| 6,71 | 5 |
| 6,37 | 3 |
| 5,58 | 6 |
| 5,11 | 2 |
| 4,99 | 4 |
| 4,60 | 7 |
| 4,36 | 11 |
| 3,99 | 6 |
| 3,84 | 100 |
| 3,72 | 43 |
| 3,48 | 6 |
| 3,34 | 7 |
| 3,191 | 3 |
| 3,060 | 11 |
| 2,989 | 13 |
| 2,868 | 3 |
| 2,611 | 4 |
| 2,546 | 2 |
| 2,492 | 6 |
| 2,453 | 3 |
| 2,417 | 3 |
| 2,397 | 3 |

Les zéolites ZSM et ZSM 11 préparées par le procédé selon l'invention peuvent être utilisées comme catalyseurs de conversion d'hydrocarbure.

L'invention permet d'obtenir des chabazites plus riches en silice que celles déjà préparées, dans lesquelles le rapport maximum

$$\frac{SiO_2}{Al_2O_3}$$

était égal à 4,9 (voir par exemple le brevet français n° 1 211 594). L'augmentation de ce rapport est un avantage en catalyse.

L'invention permet également d'obtenir des merlinoites où le rapport

$$\frac{SiO_2}{Al_2O_3}$$

est compris dans une gamme plus large que celle déjà préparée,

$$3{,}58<\frac{SiO_2}{Al_2O_3}<4{,}97,$$

dans le brevet français n° 1 201 828.

Un taux plus élevé est préférable en catalyse et un taux plus bas favorise l'augmentation de la capacité d'échange, notamment pour l'élimination des ions ammonium.

En outre, l'invention permet d'obtenir, de façon reproductible, des zéolites bien cristallisées, puisque l'on part d'une zéolite elle-même bien cristallisée; dans les procédés classiques de préparation des zéolites, on a toujours des difficultés à réaliser le même gel et, même dans un gel, il y a souvent des hétérogénéités, ce qui peut conduire à des zéolites ou des impuretés non désirées.

De plus, l'invention permet de transformer des zéolites déjà conditionnées, c'est-à-dire agglomérées (pastilles, granules, extrudats, etc.) sans liant. Cette mise en forme des zéolites utilise les procédés connus, la pression mise en oeuvre ne devant pas excéder 10 tonnes/cm². L'agglomération de la poudre peut s'effectuer éventuellement en présence d'eau. Dans ce cas, la masse d'eau no doit pas dépasser 50 % de la

masse de zéolite engagée. La transformation de ces zéolites agglomérées en nouvelles zéolites par le procédé selon l'invention renforce l'agglomération de ces dernières, rendant ainsi inutile tout nouveau conditionnement des zéolites obtenues.

Les onze exemples qui suivent, et qui sont destinés à illustrer l'invention de façon non limitative, concernent la préparation de chabazite, merlinoite, édingtonite, ZSM 11 et ZSM 5, à partir de zéolites déjà agglomérées ou non.

Exemple 1

Cet exemple concerne la préparation de chabazite.

Préparation n° 1

On part de 300 g de zéolite Na-Y ayant un rapport

$$\frac{SiO_2}{Al_2O_3}=4,2$$

et dont la taille des cristaux est comprise entre 1 et 3 microns.

On met ces 300 g de zéolite Na-Y en suspension dans un litre de solution aqueuse molaire M de nitrate de potassium, pendant 24 heures, à température ambiante.

Après filtration, on remet le solide en suspension dans un litre de solution aqueuse molaire M de nitrate de potassium à 60°C, pendant 24 heures. On filtre et on répète cette opération deux fois.

On lave à l'eau et on sèche le solide à 100°C.

On obtient ainsi une zéolite K-Y avec un taux d'échange des ions $Na^+$ en $K^+$ égal à 95 %.

On prend 750 mg de la zéolite K-Y ainsi obtenue et on ajoute 2,5 ml de solution de lithine Li OH M/2. Le rapport

$$\frac{\text{liquide}}{\text{solide}}$$

est égal à 3,3.

On chauffe la suspension dans un tube de verre scellé à 100°C pendant 72h. On filtre, on lave à l'eau et on sèche.

On obtient une chabazite de formule:

$$0,90\ K_2O/0,06\ Na_2O/0,15\ Li_2O/Al_2O_3/4,15\ SiO_2/5,8\ H_2O.$$

qui est identifiée par son spectre de diffraction aux rayons X.

Préparation n° 2

On part de 750 mg de zéolite K-Y obtenue de la même façon que dans la préparation n° 1, ayant un rapport

$$\frac{SiO_2}{Al_2O_3}=4,2$$

et dont la taille des cristaux est comprise entre 2 et 4 microns. Ces 750 mg de zéolite K-Y sont pastillés à un pression de 120 $kgf/cm^2$ sans liant.

Les pastilles obtenues sont mises en contact avec 2,5 ml de solution de lithine Li OH M/20 dans un autoclave de 12,5 ml. On porte l'autoclave à 150°C pendant 72 heures. On filtre, on lave à l'eau et on sèche. On obtient ainsi 650 mg d'une chabazite analogue à celle obtenue dans la préparation n° 1.

Préparation n° 3

On prend 50 g de zéolite Na-Y de rapport

$$\frac{SiO_2}{Al_2O_3}=4$$

et dont la taille des cristaux est comprise entre 3 et 5 microns.

On met ces 50 g en suspension dans une solution molaire M de nitrate d'ammonium à 80°C pendant 4 heures.

Après filtration, on lave à l'eau, on sèche le solide 4 heures à 80°C, on chauffe à 180°C pendant 16 heures. On répète cette opération trois fois.

On met ensuite le solide en suspension avec une solution M/2 d'ammoniaque pendant deux heures à 80°C. On lave à l'eau et on sèche à 40°C.

Dans toutes les opérations ci-dessus, le rapport

$$\frac{\text{liquide}}{\text{solide}}$$

est égal à 4.

On obtient ainsi une zéolite $NH_4$-Y qui est calcinée deux heures à 550°C et on obtient 32,8 g de zéolite H-Y.

Le taux d'échange des ions $Na^+$ en $H^+$ est égal à 95 %.

Les 32,8 g de zéolite H-Y sont traités avec 328 ml de solution de potasse KOH molaire avec un rapport

$$\frac{\text{liquide}}{\text{solide}}$$

égal à 10, à 100°C pendant 96 heures, dans un bécher en polytétrafluoroéthylène placé dans un autoclave.

On obtient ainsi 43,7 g de chabazite de formule:

$$0{,}95\ K_2O/0{,}05\ Na_2O/Al_2O_3/4{,}23\ SiO_2/4{,}11\ H_2O$$

qui est identifiée par son spectre de diffraction aux rayons X.

Préparation n° 4

On prend 1 g de zéolite H-Y préparée comme dans la préparation n° 3 à laquelle on ajoute 1,64 g de silice colloïdale (à 13,4 % en poids de silice) et 10 ml de solution molaire de potasse, ce qui donne un rapport

$$\frac{\text{liquide}}{\text{solide}}=9{,}4$$

et un rapport global

$$\frac{SiO_2}{Al_2O_3}=6.$$

Le mélange est placé pendant 72 heures à 100°C dans un récipient en polytétrafluoroéthylène.

On obtient 1,15 g de chabazite (dont les cristaux ont une taille comprise entre 3 et 5 microns), de formule:

$$1{,}01\ K_2O/0{,}04\ Na_2O/Al_2O_3/4{,}75\ SiO_2/3{,}94\ H_2O,$$

qui est identifiée par son spectre de diffraction aux rayons X.

Préparation n° 5

On prend 1 g de zéolite H-Y, préparée comme dans la préparation n°3, à laquelle on ajoute 3,3 g de silice colloïdale (à 13,4 % en poids de silice) et 12 ml d'une solution molaire de potasse, ce qui donne un rapport

$$\frac{\text{liquide}}{\text{solide}}=10{,}3$$

et un rapport global

$$\frac{SiO_2}{Al_2O_3}=8.$$

Le mélange est placée pendant 72 heures à 100°C dans un récipient en polytétrafluoroéthylène. On obtient 1,16 g de chabazite de formule

$$0{,}94\ K_2O/0{,}05\ Na_2O/Al_2O_3/5{,}3\ SiO_2/6{,}18\ H_2O$$

Préparation n° 6

1 g de zéolite H-Y, préparée comme dans la préparation n° 3, est pastillée à une pression de 120 $kgf/cm^2$ sans liant. Les pastilles obtenues, d'un diamètre moyen de 5 mm, sont placées dans une solution contenant 3,3 g de silice colloïdale (à 13,4 % en poids de silice) et 12 ml d'une solution molaire de potasse, correspondant à un rapport

$$\frac{\text{liquide}}{\text{solide}}=10,3$$

et un rapport global

$$\frac{SiO_2}{Al_2O_3}=8.$$

Le mélange est placé pendant 96 heures à 100°C dans un récipient en polytétrafluoroéthylène. On obtient 1,28 g de chabazite identique à celle préparée dans la prépartion n° 5.

Préparation n° 7

On prend 1 g de zéolite Na-Y dont la taille des cristaux est comprise entre 3 et 5 microns, que l'on traite par 5 ml d'une solution aqueuse d'acide chlorhydrique 2 M, pendant 2 heures, à température ambiante, sans agitation.

On ajoute à la zéolite H-Y ainsi obtenue 4 ml de solution aqueuse de potasse molaire avec un rapport

$$\frac{\text{liquide}}{\text{solide}}=16.$$

Le traitement est effectué à 100°C pendant 72 heures dans un tube de verre scellé. On obtient 117 mg de chabazite, de formule:

$$0,07\ Na_2O/0,87\ K_2O/Al_2O_3/5,03\ SiO_2/7,57\ H_2O,$$

qui est identifiée par sont spectre de diffraction aux rayons X.

Exemple 2

Cet exemple concerne la préparation de merlinoite.

Préparation n° 1

On prend 50 g de zéolite K-Y, obtenue de la même façon que dans la préparation n° 1, mais à partir de cristaux de zéolite Na-Y dont la taille est comprise entre 3 et 5 microns.

On ajoute à ces 50 g de zéolite K-Y, ayant un rapport

$$\frac{SiO_2}{Al_2O_3}=4,$$

500 ml d'une solution aqueuse de lithine M/10, ce qui correspond à un rapport

$$\frac{\text{liquide}}{\text{solide}}=10.$$

On traite le mélange à 150°C pendant 360 heures dans un récipient en polytétrafluoroéthylène placé dans un autoclave. On obtient 42,2 g de merlinoite, de formule:

$$0,95\ K_2O/0,05\ Na_2O/0,09\ Li_2O/Al_2O_3/4,34\ SiO_2/3,7\ H_2O.$$

Préparation n° 2

On part de 43 g de zéolite K-Y telle que celle de la préparation n° 1 de l'exemple 2, à laquelle on ajoute 2,15 g de silice précipitée (contenant 84 % de silice anhydre). On obtient le mélange A.

A 50 ml de solution aqueuse molaire de lithine sont ajoutés 5 g de silice précipitée (contenant 16% d'eau). On complète avec de l'eau à 500 ml. On obtient la solution B.

Le mélange A, qui a un rapport

$$\frac{SiO_2}{Al_2O_3}=5,39$$

est mis en suspension dans 430 ml de la solution B, dans un récipient en polytétrafluoroéthylène placé dans un autoclave à 150°C pendant 360 heures.

On obtient 46,7 g de merlinoite, de formule:

$$0,94\ K_2O/0,04\ Na_2O/0,15\ Li_2O/Al_2O_3/4,72\ SiO_2/41,0\ H_2O,$$

qui est identifiée par son spectre de diffraction aux rayons X.

Préparation n° 3

Le mode opératoire est identique à celui de la préparation n° 2, à cette différence près qu'on opère à 250°C pendant 72 heures. On obtient une merlinoite de formule

$$0,96\ K_2O/0,06\ Na_2O/0,16\ Li_2O/Al_2O_3/5,3\ SiO_2/3,89\ H_2O$$

Préparation n° 4

On part de zéolite Na-X ayant un rapport

$$\frac{SiO_2}{Al_2O_3}=2,2$$

dont la taille des cristaux est comprise entre 1 à 3 microns.

On échange les ions $Na^+$ avec des ions $K^+$ de la même façon que dans la préparation n° 1 de l'exemple 1.

On prend 500 mg de zéolite K-X ainsi obtenue et on ajoute 2 ml de lithine M/2. On traite le mélange dans un tube de verre scellé à 100°C pendant 72 heures.

On obtient 355 mg de merlinoite, de formule:

$$0,75\ K_2O/0,08\ Na_2O/0,36\ Li_2O/Al_2O_3/3,83\ SiO_2/4,38\ H_2O$$

Préparation n° 5

On part de 400 mg de zéolite K-X ayant un rapport

$$\frac{SiO_2}{Al_2O_3}=2,2$$

préparée comme dans la préparation n° 4. On ajoute à ces 400 mg de zéolite K-X 0,37 ml de silice colloïdale (soit 15 mg de $SiO_2$), 0,63 ml d'eau et 1 ml d'une solution molaire de lithine. On traite le mélange dans un flacon en polytétrafluoroéthylène à 100°C pendant 86 heures.

On obtient après filtration, lavage et séchage à 60°C, 300 mg de merlinoite ayant un rapport

$$\frac{SiO_2}{Al_2O_3}=2,4.$$

Préparation n° 6

On part de 400 mg de zéolite K-X ayant un rapport

$$\frac{SiO_2}{Al_2O_3}=2,2$$

préparée comme dans la préparation n° 4. On ajoute à ces 400 mg de zéolite K-X, 0,63 ml de silice colloïdale (soit 24 mg de $SiO_2$), 0,37 ml d'eau et 1 ml d'une solution de lithine molaire. On traite le mélange dans un flacon en polytétrafluoroéthylène à 100°C pendant 86 heures.

On obtient 320 mg de merlinoite ayant un rapport

$$\frac{SiO_2}{Al_2O_3}=2,6.$$

Après échange des ions potassium avec des ions sodium, cet échantillon, placé dans une solution aqueuse contenant des ions ammonium, présente un coefficient de sélectivité

$$\alpha_{Na^+}^{NH_4^+}=14,$$

pour une valeur de R=0,1 à 20°C; R désigne le titre en ions ammonium de la solution en équilibre avec la zéolite,

$$\alpha_{Na^+}^{NH_4+}$$

étant défini par la relation

$$\alpha_{Na^+}^{NH_4+} = \frac{NH4\ (Z)\ Na\ (s)}{Na\ (Z)\ NH_4\ (S)}$$

où Na (s) et $NH_4$(s) sont respectivement les concentrations à l'équilibre des ions sodium et ammonium dans la solution, Na (z) et $NH_4$ (z) étant respectivement les concentrations à l'équilibre des ions sodium et ammonium dans la zéolite.

La valeur élevée du coefficient α montre bien l'aptitude de la merlinoite à l'élimination des ions ammonium contenue dans des eaux polluées.

Exemple 3

Cet exemple concerne la préparation d'édingtonite.

Préparation n° 1

On part d'une zéolite Na-X ayant un rapport

$$\frac{SiO_2}{Al_2O_3}=2,15,$$

dont la taille es cristaux est comprise entre 1 et 3 microns. On échange les ions sodium avec des ions potassium de la même façon que dans le préparation n° 1 de l'exemple 1.

On prend 500 mg de zéolite K-X ainsi obtenue et on ajoute 2 ml d'une solution M/2 de lithine. On traite le mélange dans un récipient en polytétrafluoroéthylène à 100°C, pendant 72 heures. On obtient 400 mg d'édingtonite.

Préparation n° 2

On prend 500 mg de zéolite K-X obtenue comme dans la préparation n° 1 de cet exemple et on ajoute 2 ml d'une solution M/5 de lithine. On traite le mélange dans un récipient en polytétrafluoroéthylène à 150°C, pendant 96 heures. On obtient 307 mg d'édingtonite contenant de la merlinoite comme impureté.

Exemple 4

Cet exemple concerne la préparation de zéolite ZSM 11 à partir de zéolites X ou Y.

Préparation n° 1

A 50 ml d'eau, on ajoute 4,5 ml d'une solution d'hydroxyde de tétrabutylammonium à 40 % en poids et 0,13 g de soude en pastilles. On disperse dans la solution obtenue 4,6 g de silice amorphe (à 16 % en poids d'eau).

A cet dispersion, on ajoute 400 mg de zéolite Na-Y ayant un rapport

$$\frac{SiO_2}{Al_2O_3}=4,2.$$

On a alors un rapport global

$$\frac{SiO_2}{Al_2O_3}=92.$$

On chauffe le mélange à 165°C, pendant 120 heures, dans un récipient en polytétrafluoroéthylène placé dans un autoclave.

On obtient 4,5 g de zéolite ZSM 11 ayant un rapport

$$\frac{SiO_2}{Al_2O_3}=81.$$

Préparation n° 2

A 50 ml d'eau, on ajoute 4,5 ml d'une solution d'hydroxyde de tétrabutylammonium à 40 % en poids et 0,13 g de soude en pastilles. On disperse dans la solution obtenue 2,3 g de silice amorphe (à 16 % en poids d'eau).

A cette dispersion, on ajoute 200 mg de zéolite Na-Y ayant un rapport

$$\frac{SiO_2}{Al_2O_3}=4.$$

On a alors un rapport global

$$\frac{SiO_2}{Al_2O_3}=91,5.$$

On chauffe le mélange à 165°C, pendant 48 heures, dans un récipient en polytétrafluoroéthylène placé dans un autoclave.

On obtient 1, 8 g de zéolite ZSM 11 ayant un rapport

$$\frac{SiO_2}{Al_2O_3}=77.$$

Préparation n° 3

A 50 ml d'eau, on ajoute 4,5 ml d'une solution d'hydroxyde de tétrabutylammonium à 40 % en poids et 0,2 g de soude en pastilles. On disperse dans la solution obtenue 7 g de silice amorphe (à 16 % en poids d'eau).

A cette dispersion, on ajoute 400 mg de zéolite Na-X ayant un rapport

$$\frac{SiO_2}{Al_2O_3}=2,2.$$

On a alors un rapport global

$$\frac{SiO_2}{Al_2O_3}=99.$$

On chauffe le mélange à 165°C, pendant 120 heures, dans un récipient en polytétrafluoroéthylene placé dans un autoclave.

On obtient 6,25 g de zéolite ZSM 11 ayant un rapport

$$\frac{SiO_2}{Al_2O_3}=82.$$

Exemple 5

Cet exemple concerne la préparation de zéolite ZSM 5 à partir de zéolites X ou Y.

Préparation n° 1

A 150 ml d'eau, on ajoute 9 ml d'hydroxyde de tétrapropylammonium à 20 % en poids et 1,5 g de soude en pastilles. On disperse dans la solution obtenue 9,6 de silice amorphe (à 16 % en poids d'eau). A cette dispersion on ajoute 720 mg de faujasite Na-Y ayant un rapport

$$\frac{SiO_2}{Al_2O_3}=4,2.$$

On a alors un rapport global

$$\frac{SiO_2}{Al_2O_3}=105.$$

chauffe le mélange à 165°C, pendant 120 heures, dans un récipient en polytétrafluoroéthylène placé dans un autoclave. On obtient 6,9 g de zéolite ZSM 5.

Préparation n° 2

A 25 ml d'eau, on ajoute 1,5 ml d'hydroxyde de tètrapropylammonium à 20 % en poids et 0,25 g de

soude en pastilles. On disperse dans la solution obtenue 800 mg de silice amorphe (à 16 % en poids d'eau). A cette dispersion, on ajoute 60 mg de faujasite Na-X ayant un rapport

$$\frac{SiO_2}{Al_2O_3}=2{,}2.$$

On a alors un rapport global

$$\frac{SiO_2}{Al_2O_3}=76.$$

On chauffe le mélange à 165°C, pendant 156 heures, dans un récipient en polytétrafluoroéthylène placé dans un autoclave. On obtient 440 mg de zéolite ZSM 5.

Préparation n° 3

A 15 ml d'eau, on ajoute 5 ml d'hydroxyde de tètrapropylammonium à 20 % en poids.

On disperse dans la solution obtenue 500 mg de silice amorphe (à 16 % en poids d'eau). A cette dispersion, on ajoute 240 mg de faujasite Na-Y ayant un rapport

$$\frac{SiO_2}{Al_2O_3}=4.$$

On alors un rapport global

$$\frac{SiO_2}{Al_2O_3}=20.$$

On chauffe le mélange à 165°C, pendant 108 heures, dans un récipient en polytétrafluoréthylène placé dans un autoclave. On obtient 650 mg de zéolite ZSM 5.

Préparation n° 4

A 10 ml d'eau, on ajoute 1,5 ml d'hydroxyde de tétrapropylammonium à 20 % en poids et 0,5 g de soude en passtilles. On disperse dans la solution obtenue 5,1 g de silice colloïdale contenant 30 % en poids de silice. A cette dispersion, on ajoute 127 mg de faujasite Na-Y ayant un rapport

$$\frac{SiO_2}{Al_2O_3}=4,$$

préalablement pastillée sous une pression de 3 tonnes/cm$^2$. On a alors un rapport global

$$\frac{SiO_2}{Al_2O_3}=109.$$

On chauffe le mélange à 165°C pendant 108 heures dans un récipient en polytétrafluoréthylène placé dans un autoclave. On obtient 900 mg de zéolite ZSM 5.

Exemple 6

Cet exemple concerne la préparation de zéolite ZSM 5 à partir de mordénite.

Préparation n° 1

On traite 15 g d'une mordénite synthétique sous forme d'extrudés, à l'aide d'une solution 8N d'acide chlorhydrique, à 90°C pendant 96 heures, le rapport

$$\frac{\text{liquide}}{\text{solide}}\left(\frac{\text{volume}}{\text{masse}}\right)$$

étant de 5/1.

10 g de la mordénite sous forme acide ainsi obtenue, ayant un rapport

$$\frac{SiO_2}{Al_2O_3}=65,$$

sont plongés dans un solution préparée à partir de:

—125 ml d'eau,

—9 ml d'une solution aqueuse d'hydroxyde de tétrapropylammonium de concentration 20 % en poids,

—1,5 g de soude en pastilles.

On chauffe le mélange à 170°C pendant 120 heures dans un flacon en polytétrafluoroéthylène placé dans un autoclave.

On obtient 9,5 g d'une zéolite ZSM 5 ayant un rapport

$$\frac{SiO_2}{Al_2O_3}=68.$$

Préparation n° 2

A 990 ml d'eau, on ajoute 66 ml d'une solution aqueuse d'hydroxyde de tètrapropylammonium de concentration 20% en poids, 12 g de soude en pastilles et 90 g de silice colloïdale (à 40 % en poids de silice). Après homogénéisation, on plonge dans la solution ainsi obtenue 30 g de mordénite acide obtenue de la même façon que dans la préparation n° 1.

Le rapport global

$$\frac{SiO_2}{Al_2O_3}$$

du mélange est égal à 157. Ce mélange est chauffé à 170°C pendant 96 heures dans un flacon en polytétrafluoroéthylène placé dans un autoclave.

On obtient 51 g d'une zéolite ZSM 5 ayant un rapport

$$=103.\frac{SiO_2}{Al_2O_3}=103.$$

Exemple 7

Cet exemple concerne la préparation de zéolite ZSM 11 à partir de mordénite.

On plonge 20 g de mordénite acide obtenue de la même façon que dans le préparation n° 1 de l'exemple 6 dans une solution obtenue à partir de 90 ml d'eau, 20 ml d'une solution aqueuse d'hydroxyde de tétrabutylammonium de concentration 40 % en poids et 0,4 g de soude en pastilles.

On chauffe le mélange à 170°C pendant 120 heures dans un flacon en polytétrafluoroéthylène placé dans un autoclave.

On obtient 19 g d'une zéolite ZSM 11.

Exemple 8

Cet exemple concerne la préparation de zéolite ZSM 5 à partir de ferriérite.

A 700 ml d'eau, on ajoute 45 ml d'une solution aqueuse d'hydroxyde de tétrapropylammonium de concentration 20 % en poids et 7,5 g de soude en pastilles. Après homogènéisation, on disperse dans la solution obtenue 52 g d'un mélange intime de silice amorphe (32 g à 16 % en poids d'eau) et de 20 g de ferriérite synthétique sous forme de poudre ayant un rapport

$$\frac{SiO_2}{Al_2O_3}=10.$$

Le rapport global

$$\frac{SiO_2}{Al_2O_3}$$

du mélange est égale à 30.

On chauffe ce mélange à 165°C pendant 72 heures dans un flacon en polytétrafluoroéthylène placé dans un autoclave.

On obtient 39 g d'une zéolite ZSM 5 contenant des traces d'analcite.

Exemple 9

Cet exemple concerne la préparation de zéolite ZSM 11 à partir de ferriérite.

A 210 ml d'eau, on ajoute 47 ml d'une solution aqueuse d'hydroxyde de tétrabutylammonium de concentration 40 % en poids et 1,4 g de soude en pastilles. Après homogénéisation, on disperse dans la solution obtenue 52 g du mélange de silice et de ferriérite utilisé dans l'exemple 8.

On chauffe le mélange obtenu à 165°C pendant 72 heures, dans un flacon en polytétrafluoroéthylène placé dans un autoclave.

On obtient 41 g d'une zéolite ZSM 11.

Exemple 10

Cet exemple concerne la préparation de zéolite ZSM 5 à partir de clinoptilolite.

Préparation n° 1

On traite 30 g d'une clinoptilolite naturelle sous forme d'agglomérés broyés et criblés d'une granulométrie comprise entre 1,4 et 2 mm à l'aide d'une solution 4N d'acide chlorhydrique à 98°C pendant 45 heures, le rapport

$$\frac{\text{liquide}}{\text{solide}}\left(\frac{\text{volume}}{\text{masse}}\right)$$

etant de 10/1.

25 g de la clinoptilolite sous forme acide ainsi obtenue (de rapport

$$\frac{SiO_2}{Al_2O_3}=25,5)$$

sont plongés dans une solution préparée à partir de:

—325 ml d'eau,

—22,5 ml d'hydroxyde de tétrapropylammonium en solution aqueuse de concentration 20 % en poids,

—3,7 g de soude en pastilles.

On chauffe le mélange à 170°C pendant 96 heures dans un flacon en polytétrafluoroéthylène placé dans un autoclave.

On obtient 20 g d'une zéolite ZSM 5.

Préparation n° 2

On traite 30 g de la clinoptilolite naturelle utilisée dans la préparation n° 1 à l'aide d'une solution 8N d'acide chlorhydrique à 98°C pendant 45 heures, le rapport

$$\frac{\text{liquide}}{\text{solide}}\left(\frac{\text{volume}}{\text{masse}}\right)$$

étant de 10/1.

25 g de la clinoptilolite ainsi obtenue (ayant un rapport

$$\frac{SiO_2}{Al_2O_3}=38,2)$$

sont plongés dans une solution contenant de l'eau, de l'hydroxyde de tétrapropylammonium et de la soude identique à celle de la préparation n° 1.

On chauffe le mélange à 170°C pendant 96 heures dans un flacon en polytétrafluoroéthylène placé dans un autoclave.

On obtient 21,2 g d'une zéolite ZSM 5.

Exemple 11

25 g de la clinoptilolite naturelle traitée à l'acide chlorhydrique suivant la préparation n° 1 de l'exemple 10 sont plongés dans une solution préparée à partir de:

—105 ml d'eau,

—24 ml d'une solution aqueuse d'hydroxyde de tétrabutylammonium de concentration 40 % en poids,

—0,7 g de soude en pastilles.

On chauffe le mélange à 170°C pendant 96 heures dans un flacon en polytétrafluoroéthylène placé dans un autoclave.

On obtient 23,7 g d'une zéolite ZSM 11.

**Revendications**

1. Procédé de préparation de la chabazite, caractérisé en ce que l'on applique à une zéolite de départ Y un traitement par au moins une base minérale choisie dans le groupe constitué par la lithine et la potasse.

2. Procédé de préparation de l'édingtonite, caractérisé en ce que l'on applique à une zéolite de départ X un traitement par au moins de la lithine.

3. Procédé de préparation de la ZSM 5, caractérisé en ce que l'on applique à une zéolite de départ choisie dans le groupe constitué par les zéolites X ou Y, la mordénite, la ferriérite et la clinoptilolite, un traitement par une base constituée par de l'hydroxyde de tétrapropylammonium éventuellement en mélange avec de la soude.

4. Procédé de préparation de la ZSM 11, caractérisé en ce que l'on applique à une zéolite de départ choisie dans le groupe constitué par les zéolites X ou Y, la mordénite, la ferriérite et la clinoptilolite, un traitement par une base constituée par de l'hydroxyde de tètrabutylammonium, éventuellement en mélange avec de la soude.

5. Procédé selon l'une des revendications 1 à 4, caractérisé en ce que la zéolite de départ contient les cations généralement présents dans les zéolites naturelles ou synthétiques tels que ions alcalins ou alcalino-terreux.

6. Procédé selon l'une des revendications 1 à 5, caractérisé en ce que, préalablement au traitement par la base, on ajoute à la zéolite de départ de la silice.

7. Procédé selon l'une des revendications 1 à 6, caractérisé en ce que, préalablement au traitement par la base, les ions présents dans la zéolite de départ sont échangés avec des ions hydrogène, ammonium, lithium ou potassium.

8. Procédé selon l'une des revendications 1, 2, 5 et 6, caractérisé en ce que les ions sodium de la zéolite de départ sont échangés par des ions potassium et que la zéolite ainsi obtenue est traitée par de la lithine.

9. Procédé selon la revendication 1, caractérisé en ce que les ions sodium de la zéolite de départ sont échangés par des ions ammonium, en ce que la zéolite ainsi obtenue est calcinée à une température comprise entre 400 et 600°C et en ce que la zeolite ainsi obtenue est traitée par de la potasse.

10. Procédé selon la revendication 9, caractérisé en ce que, entre la calcination de la zéolite et le traitement par la potasse, on ajoute de la silice à la zéolite.

11. Procédé selon la revendication 1, caractérisé en ce que les ions sodium de la zéolite de départ sont échangés par des ions hydrogène et en ce que la zéolite ainsi obtenue est traitée par de la potasse.

12. Procédé selon l'une des revendications 1 et 5 à 11, 6 à 12, caractérisé en ce que la taille des cristaux de zéolite, immédiatement avant le traitement par une base, est comprise entre 0,1 et 6 microns et, de préférence, entre 0,5 et 3,5 microns.

13. Procédé selon l'une des revendications 2 à 6, et 12, caractérisé en ce que la taille des cristaux de zéolite, immédiatement avant le traitement par une base, est comprise entre 0,1 et 10 microns et, de préférence, entre 0,5 et 6 microns.

14. Procédé selon l'une des revendications 1, 5 à 11 et 12, caractérisé en ce que le rapport

$$\frac{SiO_2}{Al_2O_3}$$

de la zéolite de départ est compris entre 3,5 et 10 et de préférence entre 3,8 et 8.

15. Procédé selon l'une des revendications 3, 5 à 8, et 13, caractérisé en ce que le rapport

$$\frac{SiO_2}{Al_2O_3}$$

de la zéolite de départ est compris entre 1,8 et 2,4 et, de préférence, entre 1,9 et 2,2.

16. Procédé selon l'une des revendications 7 à 15, caractérisé en ce que le taux d'échange des ions sodium, représenté par le rapport

$$\frac{M}{M+Na^+}$$

où $M=Li^+$, $NH_4^+$, $K^+$ ou $H^+$, est supérieur à 70 % et, de préférence, supérieur à 80%.

17. Procédé selon l'une des revendications 1 à 5 à 12, 14 et 16, caractérisé en ce que le rapport

$$\frac{\text{liquide}}{\text{solide}},$$

lors du traitement par au moins une base, est comprise entre 2 et 20 et, de préférence, entre 3 et 12.

18. Procédé selon l'une des revendications 2, 5 à 8, 13 et 16, caractérisé en ce que le rapport

$$\frac{\text{liquide}}{\text{solide}},$$

lors du traitement par au moins une base, est comprise entre 2 et 20 et, de préférence, entre 3 et 8.

19. Procédé selon l'une des revendications 1, 5 à 12, 14, 16 et 17, caractérisé en ce que, lors du traitement par une base, la concentration molaire de la base est comprise entre

$$\frac{M}{1000}$$

et 4 M et, de préférence, entre

$$\frac{M}{100}$$

et 0,8 M.

20. Procédé selon l'une des revendications 2, 5 à 8, 13, 16 et 18, caractérisé en ce que, lors du traitement par une base, la concentration molaire de la base est comprise entre

$$\frac{M}{100}$$

et 2 M et, de préférence entre

$$\frac{M}{10}$$

et M.

21. Procédé selon l'une des revendications 11, 12, 14, 17 et 19, caractérisé en ce que, lorsque l'on traite une zéolite contenant des ions potassium $K^+$ par de la lithine, le rapport

$$\frac{Li^+}{Li^+ + K^+}$$

est compris entre 1 et 0, et de préférence, entre 0,8 et 0.

22. Procédé selon l'une des revendications 8, 13, 16, 18 et 21, caractérisé en ce que, lorsque l'on traite une zéolite contenant des ions potassium $K^+$ par de la lithine, le rapport

$$\frac{Li^+}{Li^+ + K^+}$$

est compris entre 0,8 et 0 et, de préférence, entre 0,5 et 0.

23. Procédé selon l'une des revendications 1, 2 et 5 à 22, caractérisé en ce que, lors du traitement par une base, la température est comprise entre 80 et 250°C et, de préférence, entre 90 et 150°C.

24. Procédé selon l'une des revendications 1, 5 à 14, 16, 19, 20 et 23, caractérisé en ce que la durée du traitement par au moins une base est comprise entre 4 et 360 heures et, de préférence, entre 6 et 100 heures.

25. Procédé selon l'une des revendications 2, 5 à 8, 13, 16, 18, 20, 22 et 23, caractérisé en ce que la durée du traitement par au moins une base est comprise entre 4 et 360 heures et, de préférence, entre 6 et 120 heures.

26. Procédé selon l'une des revendications 3 à 7 et 13, caractérisé en ce que le rapport

$$\frac{SiO_2}{Al_2O_3}$$

du mélange réactionnel avant transformation est compris entre 10 et 200 et, de préférence, entre 20 et 150.

27. Procédé selon l'une des revendications 4 à 7, 13, et 26, caractérisé en ce que le rapport molaire

$$\frac{H_2O}{OH^-}$$

dans le milieu réactionnel est compris entre 30 et 500 et, de préférence, entre 50 et 300.

28. Procédé selon l'une des revendications 3, 5 à 7, 13 et 26, caractérisé en ce que le rapport molaire

$$\frac{H_2O}{OH^-}$$

dans le milieu réactionnel est compris entre 10 et 500 et, de préférence, entre 30 et 300.

29. Procédé selon l'une des revendications 4 à 7, 13, 26 et 27, caractérisé en ce que le rapport molaire

$$\frac{OH^-}{SiO_2}$$

dans le milieu réactionnel est compris entre 0,05 et 0,6 et, de préférence, entre 0,1 et 0,4.

30. Procédé selon l'une des revendications 3, 5 à 7, 13, 26 et 28, caractérisé en ce que le rapport molaire

$$\frac{OH^-}{SiO_2}$$

dans le milieu réactionnel est comprise entre 0,05 et 1 et, de préférence, entre 0,2 et 0,8.

31. Procédé selon l'une des revendications 4 à 7, 13, 26, 27 et 29, caractérisé en ce que le rapport molaire

$$\frac{R_4\ N^+}{SiO_2}$$

où $R=C_4H_9$, est comprise entre 0,01 et 0,5 et, de préférence, entre 0,05 et 0,3.

32. Procédé selon l'une des revendications 3 à 7, 13, 26, caractérisé en ce que le rapport molaire

$$\frac{R_4N^+}{SiO_2}$$

où $R=C_3H_7$, est compris entre 0,01 et 0,8 et, de préférence, entre 0,05 et 0,2.

33. Procédé selon l'une des revendications 4 à 7, 13, 26, 27, 29 et 31, caractérisé en ce que le rapport molaire

$$\frac{M}{M+R_4N^+}$$

où $M=Na^+$, $Li^+$, $K^+$ ou $H^+$ est compris entre 0,9 et 0,05 et, de préférence, entre 0,7 et 0,3.

34. Procédé selon l'une des revendications 3, 5 à 7, 13, 26, 28, 30 et 32, caractérisé en ce que le rapport molaire

$$\frac{M}{M+R_4N^+}$$

où $M=Na^+$, $Li^+$, $K^+$ ou $H^+$ est compris entre 0,9 et 0,05 et, de préférence, entre 0,8 et 0,1.

35. Procédé selon l'une des revendications 3 à 7, 13, 26 à 34, caractérisé en ce que la durée du traitement par au moins une base est comprise entre 7 et 170 heures et, de préférence, entre 20 et 120 heures.

36. Procédé selon l'une des revendications 3 à 7, 13, 26 à 35, caractérisé en ce que la température du traitement par au moins une base est comprise entre 100 et 200°C et, de préférence, entre 120 et 180°C.

37. Les zéolites préparées par un procédé selon l'une des revendications 1 à 36, caractérisées en ce qu'elles sont sous une forme agglomérée sans liant, obtenue par l'utilisation de zéolites de départ également sous forme agglomérée sans liant.

**Patentansprüche**

1. Verfahren zur Herstellung von Chabasit, dadurch gekennzeichnet, daß ein Ausgangszeolith Y mit mindestens einer mineralischen Base aus der Gruppe bestehend aus Lithiumoxyd und Pottasche behandelt wird.

2. Verfahren zur Herstellung von Edingtonit, dadurch gekennzeichnet, daß ein Ausgangszeolith X wenigstens mit Lithiumoxyd behandelt wird.

3. Verfahren zur Herstellung von ZSM 5, dadurch gekennzeichnet, daß ein Ausgangszeolith aus der Gruppe bestehend aus den Zeolithen X und Y, Mordenit, Ferrierit und Clinoptilolith mit einer Base bestehend aus Tetrapropylammoniumhydroxyd, gegebenenfalls gemischt mit Soda, behandelt wird.

4. Verfahren zur Herstellung von ZSM 11, dadurch gekennzeichnet, daß ein Ausgangszeolith aus der Gruppe bestehend aus den Zeolithen X und Y, Mordenit, Ferrierit und Clinoptilolith mit einer Base bestehend aus Tetrabutylammoniumhydroxyd, gegebenenfalls gemischt mit Soda, behandelt wird.

5. Verfahren nach einem der Ansprüche 1 bis 4, dadurch gekennzeichnet, daß der Ausgangszeolith die im allgemeinen bei den natürlichen oder synthetischen Zeolithen vorhandenen Kationen, wie Alkalioder Erdalkali-Ionen, aufweist.

6. Verfahren nach einem der Ansprüche 1 bis 5, dadurch gekennzeichnet, daß vor der Behandlung mit der Base dem Ausgangszeolith Kieselerde zugesetzt wird.

7. Verfahren nach einem der Ansprüche 1 bis 6, dadurch gekennzeichnet, daß vor der Behandlung mit der Base die im Ausgangszeolith vorhandenen Ionen gegen Wasserstoff-, Ammonium-, Lithium- oder Kaliumionen ausgetauscht werden.

8. Verfahren nach einem der Ansprüche 1, 2, 5 und 6, dadurch gekennzeichnet, daß die Natriumionen des Ausgangszeoliths gegen Kaliumionen ausgetauscht werden und der so erhaltene Zeolith mit Lithiumoxyd behandelt wird.

9. Verfahren nach Anspruch 1, dadurch gekennzeichnet, daß die Natriumionen des Ausgangszeoliths gegen Ammoniumionen ausgetauscht werden, der so erhaltene Zeolith bei einer Temperatur zwischen 400 und 600°C kalziniert wird und der so erhaltene Zeolith mit Pottasche behandelt wird.

10. Verfahren nach Anspruch 9, dadurch gekennzeichnet, daß zwischen dem Kalzinieren des Zeoliths und der Behandlung mit Pottasche dem Zeolith Kieselerde zugesetzt wird.

11. Verfahren nach Anspruch 1, dadurch gekennzeichnet, daß die Natriumionen des Ausgangszeoliths gegen Wasserstoffionen ausgetauscht werden und der so erhaltene Zeolith mit Pottasche behandelt wird.

12. Verfahren nach einem der Ansprüche 1 und 5 bis 11, dadurch gekennzeichnet, daß die Größe der Zeolithkristalle unmittelbar vor der Behandlung mit einer Base zwischen 0,1 und 6 Mikron, vorzugsweise zwischen 0,5 und 3,5 Mikron, liegt.

13. Verfahren nach einem der Ansprüche 2 bis 6 und 12, dadurch gekennzeichnet, daß die Größe der Zeolithkristalle unmittelbar vor der Behandlung mit einer Base zwischen 0,1 und 10 Mikron, vorzugsweise zwischen 0,5 und 6 Mikron, liegt.

14. Verfahren nach einem der Ansprüche 1, 5 bis 11 und 12, dadurch gekennzeichnet, daß das $SiO_2/Al_2O_3$-Verhältnis des Ausgangszeoliths zwischen 3,5 und 10, vorzugsweise zwischen 3,8 und 8, liegt.

15. Verfahren nach einem der Ansprüche 3, 5 bis 8 und 13, dadurch gekennzeichnet, daß das $SiO_2/Al_2O_3$-Verhältnis des Ausgangzeoliths zwischen 1,8 und 2,4, vorzugsweise zwischen 1,9 und 2,2 liegt.

16. Verfahren nach einem der Ansprüche 7 bis 15, dadurch gekennzeichnet, daß der durch das Verhältnis $M/(M+Na^+)$ mit $M=Li^+$, $NH_4^+$, $K^+$ oder $H^+$ repräsentierte Natriumionenaustauschgrad größer als 70 %, vorzugsweise größer als 80 %, ist.

17. Verfahren nach einem der Ansprüche 1, 5 bis 12, 14 und 16, dadurch gekennzeichnet, daß das Flüssigkeit-Feststoff-Verhältnis bei der Behandlung mit mindestens einer Base zwischen 2 und 20, vorzugsweise zwischen 3 und 12, liegt.

18. Verfharen nach einem der Ansprüche 2, 5 bis 8, 13 und 16, dadurch gekennzeichnet, daß das Flüssigkeit/Feststoff-Verhältnis bei der Behandlung mit mindestens einer Base zwischen 2 und 20, vorzugsweise zwischen 3 und 8, liegt.

19. Verfahren nach einem der Ansprüche 1, 5 bis 12, 14, 16 und 17, dadurch gekennzeichnet, daß bei der Behandlung mit einer Base die molare Konzentration der Base zwischen M/1000 und 4M, vorzugsweise zwischen M/100 und 0,8 M, liegt.

20. Verfahren nach einem der Ansprüche 2, 5 bis 8, 13, 16 und 18, dadurch gekennzeichnet, daß bei der Behandlung mit einer Base die molare Konzentration der Base zwischen M/100 und 2M, vorzugsweise zwischen M10 und M, liegt.

21. Verfahren nach einem der Ansprüche 11, 12, 14, 17 und 19, dadurch gekennzeichnet, daß bei der Behandlung eines Kaliumionen $K^+$ aufweisenden Zeoliths mit Lithiumoxyd das $Li^+/(Li^++K^+)$-Verhältnis zwischen 1 und 0, vorzugsweise zwischen 0,8 und 0, liegt.

22. Verfahren nach einem der Ansprüche 8, 13, 16, 18 und 21, dadurch gekennzeichnet, daß bei der Behandlung eines Kaliumionen $K^+$ aufweisenden Zeoliths mit Lithiumoxyd das $Li^+/(Li^++K^+)$-Verhältnis zwischen 0,8 und 0, vorzugsweise zwischen 0,5 und 0, liegt.

23. Verfahren nach einem der Ansprüche 1, 2 und 5 bis 22, dadurch gekennzeichnet, daß bei der Behandlung mit einer Base die Temperatur zwischen 80 und 250°C, vorzugsweise zwischen 90 und 150°C, liegt.

24. Verfahren nach einem der Ansprüche 1, 5 bis 14, 16, 19, 20 und 23, dadurch gekennzeichnet, daß die Behandlung mit mindstens einer Base zwischen 4 und 360 Stunden, vorzugsweise zwischen 6 und 100 Stunden, dauert.

25. Verfahren nach einem der Ansprüche 2, 5 bis 8, 13, 16, 18, 20, 22 und 23, dadurch gekennzeichnet,

daß die Behandlung mit mindstens einer Base zwischen 4 und 360 Stunden, vorzugsweise zwischen 6 und 120 Stunden, dauert.

26. Verfahren nach einem der Ansprüche 3 bis 7 und 13, dadurch gekennzeichnet, daß das $SiO_2/Al_2O_3$-Verhältnis des Reaktionsgemisches vor der Umwandlung zwischen 10 und 200, vorzugsweise zwischen 20 und 150, liegt.

27. Verfahren nach einem der Ansprüche 4 bis 7, 13 und 26, dadurch gekennzeichnet, daß das $H_2O/OH^-$-Molverhältnis im Reaktionsmilieu zwischen 30 und 500, vorzugsweise zwischen 50 und 300, liegt.

28. Verfahren nach einem der Ansprüche 3, 5 bis 7, 13 und 26, dadurch gekennzeichnet, daß das $H_2O/OH^-$-Molverhältnis im Reaktionsmilieu zwischen 10 und 500, vorzugsweise zwischen 30 und 300, liegt.

29. Verfahren nach einem der Ansprüche 4 bis 7, 13, 26 und 27, dadurch gekennzeichnet, daß das $OH^-/SiO_2$-Molverhältnis im Reaktionsmilieu zwischen 0,05 und 0,6, vorzugsweise zwischen 0,1 und 0,4 liegt.

30. Verfahren nach einem der Ansprüche 3, 5 bis 7, 13, 26 und 28, dadurch gekennzeichnet, daß das $OH^-/SiO_2$-Molverhältnis im Reaktionsmilieu zwischen 0,05 und 1, vorzugsweise zwischen 0,2 und 0,8 liegt.

31. Verfahren nach einem der Ansprüche 4 bis 7, 13, 26, 27 und 29, dadurch gekennzeichnet, daß das $R_4N^+/SiO_2$-Molverhältnis, wobei $R=C_4H_9$, zwischen 0,01 und 0,5, vorzugsweise zwischen 0,05 und 0,3, liegt.

32. Verfahren nach einem der Ansprüche 3 bis 7, 13, 26, dadurch gekennzeichnet, daß das $R_4N^+/SiO_2$-Molverhältnis, wobei $R=C_3H_7$, zwischen 0,01 und 0,8, vorzugsweise zwischen 0,05 und 0,2, liegt.

33. Verfahren nach einem der Ansprüche 4 bis 7, 13, 26, 27, 29 und 31, dadurch gekennzeichnet, daß das $M/(M+R_4N^+)$-Molverhältnis, wobei $M=Na^+$, $Li^+$, $K^+$ oder $H^+$, zwischen 0,9 und 0,05, vorzugsweise zwischen 0,7 und 0,3, liegt.

34. Verfahren nach einem der Ansprüch 3, 5 bis 7, 13, 26, 28, 30 und 32, dadurch gekennzeichnet, daß das $M/(M+R_4N^+)$-Molverhältnis, wobei $M=Na^+$, $Li^+$, $K^+$ oder $H^+$, zwischen 0,8 und 0,05 vorzugsweise zwischen 0,8 und 0,1, liegt.

35. Verfharen nach einem der Ansprüche 3 bis 7, 13, 26 bis 34, dadurch gekennzeichnet, daß die Behandlung mit mindstens einer Base zwischen 7 und 170 Stunden, vorzugsweise zwischen 20 und 120 Stunden, dauert.

36. Verfharen nach einem der Ansprüche 3 bis 7, 13, 26 bis 35, dadurch gekennzeichnet, daß die Temperatur der Behandlung mit mindstens einer Base zwischen 100 und 200°C, vorzugsweise zwischen 120 und 180°C, liegt.

37. Zeolithe, hergstellt nach dem Verfahren gemäß einem der Ansprüche 1 bis 36, dadurch gekennzeichnet, daß sie in ohne Bindemittel agglomerierter Form vorliegen, welche durch Verwendung von ebenfalls in ohne Bindemittel agglomerierter Form vorliegenden Ausgangszeolithen erhalten worden ist.

**Claims**

1. A method for the preparation of chabazite, characterised in that a treatment with at least one mineral base selected from the group comprising lithium oxide and potash is applied to a starting zeolite Y.

2. A method for the preparation of edingtonite, characterised in that a treatment with at least lithium oxide is applied to a starting zeolite X.

3. A method for the preparation of ZSM 5, characterised in that a treatment with a base comprising tetrapropyl ammonium hydroxide, optionally mixed with soda, is applied to a starting zeolite selected from the group comprising zeolites X or Y, mordenite, ferrierite and clinoptilolite.

4. A method for the preparation of ZSM 11, characterised in that a treatment with a base comprising tetrabutyl ammonium hydroxide, optionally mixed with soda, is applied to a starting zeolite selected from the group comprising zeolites X or Y, mordenite, ferrierite and clinoptilolite.

5. A method according to any of Claims 1 to 4, characterised in that starting zeolite contains the cations generally present in natural or synthetic zeolites, such as alkaline or alkaline-earth ions.

6. A method according to any of Claims 1 to 5, characterised in that silica is added to the starting zeolite, prior to the treatment with a base.

7. A method according to any of Claims 1 to 6, characterised in that the ions present in the starting zeolite are exchanged with hydrogen, ammonium, lithium or potassium ions, prior to the treatment with a base.

8. A method according to any of Claims 1, 2, 5 and 6, characterised in that the sodium ions of the starting zeolite are exchanged with potassium ions and in that the zeolite thus obtained is treated with lithium oxide.

9. A method according to Claim 1, characterised in that the sodium ions of the starting zeolite are exchanged with ammonium ions, in that the zeolite thus obtained is calcined at a temperature of between 400 and 600°C, and in that the zeolite thus obtained is treated with potash.

10. A method according to Claim 9, characterised in that silica is added to the zeolite between the calcination of the zeolite and the treatment with potash.

11. A method according to Claim 1, characterised in that the sodium ions of the starting zeolite are exchanged with hydrogen ions and in that the zeolite thus obtained is treated with potash.

12. A method according to any of Claims 1 and 5 to 11, 6 to 12, characterised in that immediately prior

to the treatment with a base the size of the zeolite crystals is between 0.1 and 6 microns and, preferably, between 0.5 and 3.5 microns.

13. A method according to any of Claims 2 to 6 and 12, characterised in that immediately prior to the treatment with a base the size of the zeolite crystals is between 0.1 and 10 microns and, preferably, between 0.5 and 6 microns.

14. A method according to any of Claims 1, 5 to 11 and 12, characterised in that the ratio

$$\frac{SiO_2}{Al_2O_3}$$

of the starting zeolite is between 3.5 and 10 and, preferably, between 3.8 and 8.

15. A method according to any of Claims 3, 5 to 8 and 13, characterised in that the ratio

$$\frac{SiO_2}{Al_2O_3}$$

of the starting zeolite is between 1.8 and 2.4 and, preferably, between 1.9 and 2.2.

16. A method according to any of Claims 7 to 15, characterised in that the rate of exchange of sodium ions, represented by the ratio

$$\frac{M}{M+Na^+}$$

in which $M=Li^+$, $NH_4^+$, $K^+$ or $H^+$, is higher than 70 % and, preferably, higher than 80 %.

17. A method according to any of Claims 1 to 5 to 12, 14 and 16, characterised in that the

$$\frac{\text{liquid}}{\text{solid}}$$

ratio, during the treatment with at least one base, is between 2 and 20 and, preferably, between 3 and 12.

18. A method according to any of Claims 2, 5 to 8, 13 and 16, characterised in that the

$$\frac{\text{liquid}}{\text{solid}}$$

ratio, during the treatment with at least one base, is between 2 and 20 and, preferably, between 3 and 8.

19. A method according to any of Claims 1, 5 to 12, 14, 16 and 17, characterised in that during the treatment with a base the molar concentration of the base is between

$$\frac{M}{1000}$$

and 4 M and, preferably, between

$$\frac{M}{100}$$

and 0.8 M.

20. A method according to any of Claims 2, 5 to 8, 13, 16 and 18, characterised in that during the treatment with a base the molar concentration of the base is between

$$\frac{M}{100}$$

and 2 M and, preferably, between

$$\frac{M}{10}$$

and M.

21. A method according to any of Claims 11, 12, 14, 17 and 19, characterised in that when a zeolite containing $K^+$ potassium ions is treated with lithium oxide the ratio

$$\frac{Li^+}{Li^+ + K^+}$$

is between 1 and 0 and, preferably, between 0.8 and 0.

22. A method according to any of Claims 8, 13, 16, 18 and 21, characterised in that when a zeolite containing $K^+$ potassium ions is treated with lithium oxide the ratio

$$\frac{Li^+}{Li^+ + K^+}$$

is between 0.8 and 0 and, preferably, between 0.5 and 0.

23. A method according to any of Claims 1, 2 and 5 to 22, characterised in that during the treatment with a base the temperature is between 80 and 250°C and, preferably, between 90 and 150°C.

24. A method according to any of Claims 1, 5 to 14, 16, 19, 20 and 23, characterised in that the treatment time with at least one base lasts between 4 and 360 hours and, preferably, between 6 and 100 hours.

25. A method according to any of Claims 2, 5 to 8, 13, 16, 18, 20, 22 and 23, characterised in that the treatment time with at least one base lasts between 4 and 360 hours and, preferably, between 6 and 120 hours.

26. A method according to any of Claims 3 to 7 and 13, characterised in that the ratio

$$\frac{SiO_2}{Al_2O_3}$$

of the reaction mixture prior to transformation is between 10 and 200 and, preferably, between 20 and 150.

27. A method according to any of Claims 4 to 7, 13 and 26, characterised in that the molar ratio

$$\frac{H_2O}{OH^-}$$

in the reaction medium is between 30 and 500 and, preferably, between 50 and 300.

28. A method according to any of Claims 3, 5 to 7, 13 and 26, characterized in that the molar ratio

$$\frac{H_2O}{OH^-}$$

in the reaction medium is between 10 and 500 and, preferably, between 30 and 300.

29. A method according to any of Claims 4 to 7, 13, 26 and 27, characterised in that the molar ratio

$$\frac{OH^-}{SiO_2}$$

in the reaction medium is between 0.05 and 0.6 and, preferably, between 0.1 and 0.4.

30. A method according to any of Claims 3, 5 to 7, 13, 26 and 28, characterised in that the molar ratio

$$\frac{OH^-}{SiO_2}$$

in the reaction medium is between 0.05 and 1 and, preferably, between 0.2 and 0.8.

31. A method according to any of Claims 4 to 7, 13, 26, 27 and 29, characterised in that the molar ratio

$$\frac{R_4N^+}{SiO_2},$$

in which $R=C_4H_9$, is between 0.01 and 0.5 and, preferably between 0.05 and 0.3.

32. A method according to any of claims 3 to 7, 13, 26, characterised in that the molar ratio

$$\frac{R_4N^+}{SiO_2},$$

in which $R=C_3H_7$ is between 0.01 and 0.8 and, preferably, between 0.05 and 0.2.

33. A method according to any of Claims 4 to 7, 13, 26, 27, 29 and 31, characterised in that the molar ratio

$$\frac{M}{M+R_4N^+},$$

in which $M=Na^+$, $Li^+$, $K^+$ or $H^+$, is between 0.9 and 0.05 and, preferably, between 0.7 and 0.3.

34. A method according to any of Claims 3, 5 to 7, 13, 26, 28, 30 and 32, characterised in that the molar ratio

$$\frac{M}{M+R_4N^+},$$

in which $M=Na^+$, $Li^+$, $K^+$ or $H^+$ is between 0.9 and 0.05 and, preferably, between 0.8 and 0.1.

35. A method according to any of Claims 3 to 7, 13, 26 to 34, characterised in that the treatment time with at least one base lasts between 7 and 170 hours and, preferably, between 20 and 120 hours.

36. A method according to any of Claims 3 to 7, 13, 26 to 35, characterised in that the treatment temperature with at least one base is between 100 and 200°C and, preferably, between 120 and 180°C.

37. The zeolites prepared by a method according to any of Claims 1 to 36, characterised in that they are in an agglomerated form without a binder, obtained by the utilisation of starting zeolites also in an agglomerated form without a binder.